# EUROPEAN PATENT APPLICATION

(11) **EP 4 610 833 A1**
(43) Date of publication of application: **03.09.2025**
(21) Application number: 24159859.8
(22) Date of filing: 27.02.2024
(51) Int. Cl.: G06F 11/36

(54) **A METHOD FOR TESTING AT LEAST ONE SOFTWARE COMPONENT OF A SYSTEM BY AN ELECTRONIC COMPUTING DEVICE, A COMPUTER PROGRAM PRODUCT, COMPUTER-READABLE STORAGE MEDIUM, AS WELL AS AN ELECTRONIC COMPUTING DEVICE**

(71) Applicant: Siemens Aktiengesellschaft, 80333 München (DE)
(72) Inventor: Gruner, Tobias, 81675 München (DE); Müller, Harald, 82229 Seefeld-Hechendorf (DE); Stückjürgen, Christoph, 80807 München (DE); Zeitler, Daniel, 91281 Kirchenthumbach (DE)
(74) Representative: Siemens Patent Attorneys

(57) **Abstract**

The inventions relates to a method for testing at least one software component (14, 16) of a system (18) by an electronic computing device (10), comprising the steps of providing a test coordinator module (12) of the electronic computing device (10) for the system (18), wherein the test coordinator module (12) provides a test protocol for testing the software component (14, 16), and wherein the test coordinator module (12) is provided separately to the software component (14, 16); and testing the software component (14, 16) by coordinating the testing of the software component (14, 16) depending on the test protocol by the test coordinator module (12). Furthermore, the present invention relates to a computer program product, a computer-readable storage medium, as well as to an electronic computing device (10).

## Description

The present invention relates to a method for testing at least one software component of a system by an electronic computing device according to the pending claim 1. Furthermore, the present invention relates to a corresponding computer program product, to a corresponding computer-readable storage medium, as well as to a corresponding electronic computing device.

A context of the following invention is the in-field testing of modular technical system which consists of software services, for example control functions. Each service operates in an environment which consists of inputs, outputs and other services.

Known approaches for in-field testing of software services in such a system integrate so-called test probes into the software services. Test probes are built into the software services permanently, for example, not only during test execution but also during normal operation of the modular system.

Nowadays, two different approaches of in-field testing are known, both of which use the above-mentioned test probe that are permanently built into the technical system of interest. The first approach is that test probes built into the technical system communicate with an external test system. Built-in test probes allow an external test system to access internal data of the software services in the technical system. Test case programs running on the external test system perform the tests. The second approach is that test probes and the test cases directly control these test probes are permanently built into the technical system. Test runnings in the technical system perform the tests.

Test probes are added according to the state of the art to a software service at build time. In the second approach mentioned above, also test cases and test execution schedules are added to a software service at build time. This approach does not allow to perform tests which use data across the different services. Test probes, test cases and test execution schedules are managed within the development cycle of an individual software service.

The first approach mentioned above includes a dedicated external test system. Test cases are executed on this external test system. A developer who writes such a test case must know which test probes exist in the technical system. If the test case involves the test probes of multiple services, the developer must be aware of which test probes are built into each of the services so that he or she can write the test logic based on the data provided by the test probes. The list of available test probes is typically generated per service at build time. For an overview of all test probes, merging the per-service list is necessary. It must be ensured that the list of test probes is aligned with the version of the service which is deployed in the technical system.

Schedule in the execution of test cases is done by configuring the external test system, execution of the test cases is done on the external test system.

It is an object of the present invention to provide a method, a computer program product, a computer-readable storage medium, as well as an electronic computing device, by which testing of at least one software component of a system can be performed in an improved manner.

This object is solved by a method, a corresponding computer program product, a corresponding computer-readable storage medium, as well as a corresponding electronic computing device according to the independent claims. Advantageous embodiments are presented in the dependent claims.

One aspect of the invention relates to a method for testing at least one software component of a system by an electronic computing device. A test coordinator module of the electronic computing device is provided for the system, wherein the test coordinator module provides a test protocol for testing the software component, and wherein the test coordinator module is provided separately to the software component. The software component is tested by coordinating the testing of the software component depending on the test protocol by the test coordinator module.

Therefore, an independent test coordinator module is provided, wherein the test coordinator module is in particular independent to the software component.

In particular, for example, test suites and probes of multiple services are loosely coupled because they can be changed individually for each service. Furthermore, instead test suites can be dynamically defined in a standardized way at a single point, for example the administration shell of the according asset, stored, for example, in a central asset repository, without the need to provide such information inside the application or service itself.

Furthermore, test probes can also be accessed from this entry. The developer of a service only must provide the implementation of test probes according to the specification in the service meta model.

This enables other developers to easily discover test probes of a system by using the meta model to query test probes spread across the system.

By shifting test suite execution into, for example, a side car, test logic is separated from the business logic of a service.

In particular, the invention addresses the problem how to centrally manage test probes, test cases and test case execution within a technical system. In particular, the invention allow to efficiently develop and execute in-field integration tests which use data provided by test probes across multiple services. Test probes available in the technical system for test case developers are provided in an efficient way, providing an efficient way to store test cases, and to allow in-field execution of these test cases.

According to an embodiment, the test coordinator module is provided as a centralized module for the software component. Therefore, just one module is provided for coordinating the tests of the software component. In other words, the test coordinator module is a so-called centralized test coordinator module.

In another embodiment, the test coordinator module is provided for at least two different software components of the system. Therefore, two different software components, in particular two different services, can be tested by the test coordinator module. Furthermore, the impact on the other software components and/or dependencies of the two software components can also be taken into consideration during the test phase.

In another embodiment, the test coordinator module comprises a first coordinator element, which is provided as a first sidecar of a first software component, and a second coordinator element, which is provided as a second sidecar of a second software component. Therefore, each software component may comprise a coordinator element. Therefore, the software component can be tested individually.

In another embodiment, the first coordinator element and the second coordinator element are connected to each other for coordinating the test protocol. In particular, the first coordinator element and the second coordinator element are communicating with each other, for example they are exchanging messages, for example, the current status messages of the tests Therefore, an efficient way for testing the software components is provided.

According to another embodiment, a service meta model module is provided, which is connected to the test coordinator module, and wherein a test logic for testing the system is provided by the service meta model module. In particular, all necessary information that is needed to perform the test as an aspect of the service meta module is provided by the service meta model module. In particular, the service meta model module can be provided as a submodule of an asset administration shell, in particular for describing any kind of assets, for example software and hardware assets and hierarchies of both. This information can then be used by the test coordinator module mentioned above to execute the tests.

In another embodiment, a point in time for testing the software component and/or a test probe for testing the software component and/or a trigger signal to test the software component and/or an expected result of the test and/or test suites are provided by the service meta model module. Therefore, there is no need to provide the software component with these codes. The corresponding codes are provided in the service meta model module, and the test coordinator module may get the information during the test and/or before the test from the service meta model module. Therefore, a developer from the software component can concentrate on coding the software component without the need of coding test probes.

In another embodiment, each coordinator element is communicating with the service meta model module. Therefore, communication between the coordinator elements and the service meta model module is provided. Therefore, each coordinator element may get information from the service meta model module.

In another embodiment, a test suite is coordinated by one of the test coordinator elements, wherein a leader of the test suite is determined by the service meta model module. Therefore, a leader of combined test suites may be elected among the involved test systems. For distributed test case execution, the test suite portions may be executed by the respective test system. Whenever the combined test cases require loading of probe data, running tests, or getting results from remote services, the test system that is directly attached to the respective service may act as a proxy for its service.

In another embodiment, an integration test of the software component in the system is performed by the test coordinator module. Therefore, the software component can be tested, if it fits in the whole system.

In another embodiment, the service meta model module is connected to a service meta model repository. The service meta model repository can be, for example, an asset administration shell, in particular to store relevant test-rated information of the software components as part of the overall service description. This may include information about the test probes that are built into the (micro-)services, for example which information do the test probes delivery, how can they be accessed/triggered, what are expected inputs/outputs, and, for example, test suites that can be used to conduct unit and integration tests using the test probes. Using this feature, each service has a fully self-contained description, including test-related information, enabling further decoupling of modular system for testing purposes.

In another embodiment, the software component is provided just as a business logic code. Therefore, a developer of the software component can concentrate on developing the software component without the need for developing the test probes. This leads to an easier way of coding the software component and to a higher transparency for a user of the software component.

In particular, the present invention is a computer-implemented method. Therefore, another aspect of the invention relates to computer program product comprising program code means for performing a method according to the preceding aspect.

Furthermore, the present invention relates to a computer-readable storage medium comprising at least the computer program product according to the preceding aspect.

Another aspect of the invention relates to an electronic computing device for testing a software component of a system, comprising at least one test coordinator module, wherein the electronic computing device is configured for performing a method according the preceding aspect. In particular, the method is performed by the electronic computing device.

Advantageous embodiments of the method are to be regarded as advantageous embodiments of the computer program product, the computer-readable storage medium, as well as the electronic computing device. The electronic computing device may comprise means for performing the method.

Here and in the following, a module can be understood as a hardware module or as a software module. In particular, a module may also comprise a hardware and a software portion implemented on the hardware.

A software module may be understood as a portion of software code functionally connected and combined to a unit. A software module may comprise or implement several processing steps and/or data structures. A method step of providing a software module may be understood to comprise providing a respective software code in a computer readable fashion on a computer readable storage medium.

A computing unit/electronic computing device may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

For use cases or use situations which may arise in a method according to the invention and which are not explicitly described herein, it may be provided that, in accordance with the method, an error message and/or a prompt for user feedback is output and/or a default setting and/or a predetermined initial state is set.

Independent of the grammatical term usage, individuals with male, female or other gender identities are included within the term.

Further features and feature combinations of the invention are obtained from the figures and their description as well as the claims. In particular, further implementations of the invention may not necessarily contain all features of one of the claims. Further implementations of the invention may comprise features or combinations of features, which are not recited in the claims.

Therefore, the figures show in:
- Fig. 1: a schematic block diagram according to an embodiment of an electronic computing device for performing a method according to an embodiment of the invention; and
- Fig. 2: another schematic block diagram according to an embodiment of the method.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

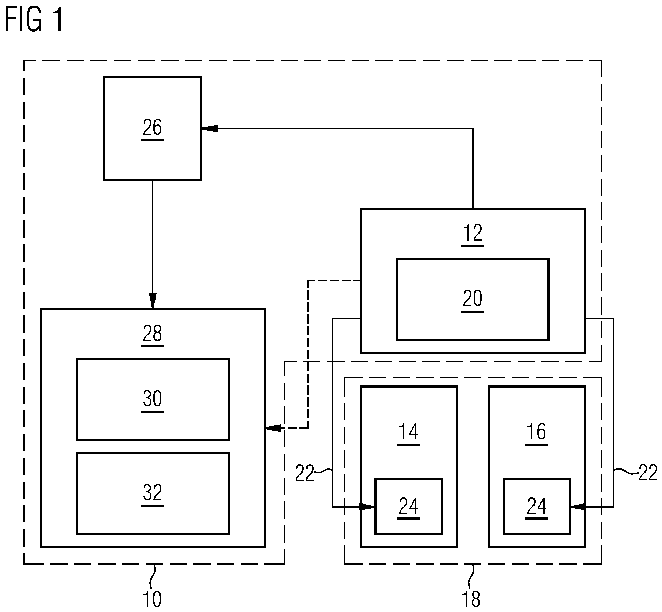

Fig. 1 shows a schematic block diagram according to an embodiment of an electronic computing device 10. The electronic computing device 10 according to the shown embodiment comprises at least one test coordinator module 12. The electronic computing device 10 is configured for testing at least one software component 14, 16 of a system 18. Therefore, the test coordinator module 12 may comprise a test case run time 20. Furthermore loading probe data and run tests of a first software component 14 and a second software component 16 is shown with an arrow 22.

Furthermore, it is shown that each software component 14, 16 may comprise a test probe 24. Furthermore, the test coordinator module 12 may query a software meta model repository 26. The test coordinator module 12 may query a service meta model repository 26. The service meta model repository 26 may contain a service meta model module 28. The test coordinator module 12 is connected to the service meta model module 28, and, for example, test probes and test suites may be loaded. The service meta model module 28 may comprise an aspect containing test probe information 30 and aspect containing test suites 32.

In particular, according to Fig. 1, a method for testing at least the one software component 14, 16 is provided. The test coordinator module 12 is provided, wherein the test coordinator module 12 provides a test protocol for testing the software component 14, 16, wherein the test coordinator module 12 is provided separately to the software component 14, 16. The software component 14, 16 is tested by coordinating the testing of the software component 14, 16 depending on the test protocol by the test coordinator module 12.

According to the shown embodiment, the test coordinator module 12 is provided as a centralized module for the software component 14, 16. Furthermore, it is shown that the test coordinator module 12 is provided for at least two different software components 14, 16 of the system 18. Furthermore, it is shown that the service meta model module 28 is provided, which is connected to the test coordinator module 12, and wherein a test logic for testing the system 18 is provided by the service meta model module 28. For example, a point in time for testing the software component 14, 16, and/or a test probe for testing the software component 14, 16 and/or a trigger signal to test the software component 14, 16 and/or an expected result of the test and/or test suites are provided by the service meta model module 28. Furthermore, an integration test of the software component 14, 16 in the system 18 may be performed by the test coordinator module 12. In particular, the service meta module 28 is connected to the service meta model repository 26. Furthermore, the software component 14, 16 is provided just as a business logic code.

In particular Fig. 1 shows that a service meta model repository 26, for example the asset administration shell, is used to store relevant test-related information of the system software components 14, 16, in particular services, as part of the overall service description. This may include the information about the test probes that are built into the micro-services, for example, which information do the test probes deliver, how can they be accessed/triggered, what are expected inputs/outputs. Furthermore, test suites that can be used to conduct the tests using the test probes are included. Using this feature, each software component 14, 16 has a fully self-contained description, including test-related information, enabling further decoupling of modular system for testing purposes.

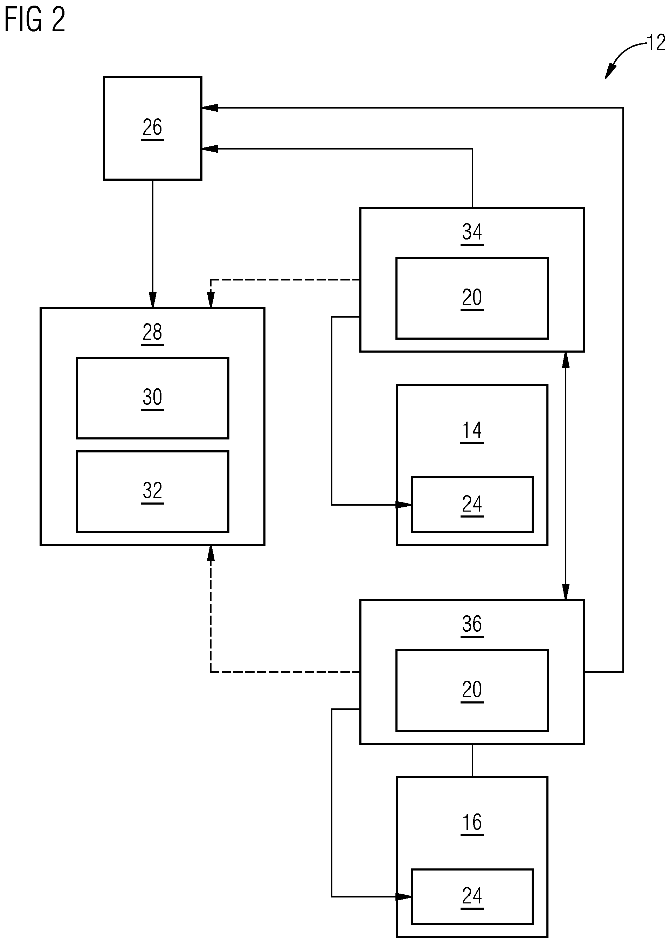

The execution of the tests can be done in two ways, centralized, as shown in Fig. 1, and decentralized, as shown in Fig. 2. The centralized test execution shown in Fig. 1 works as follows. The test coordinator module 12 knows about the software components 14, 16 that make up the system 18 under test. It queries the service meta model repository 26 for test-related information of these software components 14, 16. The service meta model repository 26 contains this information as part of the service meta model module 28 of the respective software component 14, 16. The test coordinator module 12 loads information about the test probes in the software components 14, 16 as well as test suites that need to be executed. Using a test case runtime 20, it executes the test suites. During this execution, the test coordinator module 12 loads probe data to the test probes into the software components 14, 16, triggers in-field tests, executes test probes in the software components 14, 16, and it collects test data, which is then used to evaluate the test results.

Fig. 2 shows another schematic block diagram according to an embodiment of the invention. According to the shown embodiment, a decentralized configuration of the test coordinator module 12 is shown. In particular, the test coordinator module 12 may comprise a first coordinator element 34 and a second coordinator element 36, wherein these coordinator elements 34, 36 are provided as so-called side cars. Therefore, it is shown that the test coordinator module 12 may comprise a first coordinator element 34, which is provided as a first side car of the first software component 14, and the second coordinator element 36, which is provided as a second side car of the second software component 16. In particular, the first coordinator element 34 and the second coordinator element 36 are connected to each other for coordinating the test protocol. In particular, each coordinator element 34, 36 is furthermore communicating with the service meta model module 28. Furthermore, test suites may be coordinated by one of the control elements 34, 36, wherein a leader of the test suite is determined by the service meta model module 28.

Therefore, Fig. 2 shows that executing test suites may be distributed to the so-called side cars of the software components 14, 16 under test. These side cars can be thought of as a decentralized implementation of the functionality of the centralized test coordinator module 12 of Fig. 1. Each software component 14, 16 in the system 18 gets a test system side car attached to it. This may be implemented, for example, by existing service mesh technologies.

Each side car first queries test-related information from the service meta model repository 26, which again consists of test probe information and test suites, in particular for the unit tests, of the software components 14, 16 it is connected to. Using this, each side car can already conduct the isolated tests of the software component 14, 16 it is attached to. These isolated tests work in the same manner as explained above. Probe data is loaded to the service instance, test runs are executed by the test probes in the software components 14, 16, and test data is collected and evaluated by the side cars.

For test cases related to multiple software components 14, 16, in particular so-called integration tests, the side cars may coordinate with each other. The test information of each software component 14, 16 in the service meta model repository 26 also contains information about the relation to other software components 14, 16, and test suites for integration testing and tests involving multiple software components 14, 16. The execution of those combined test suites is either done in one side car, or it may be distributed among them. For the first option, either the leading software component 14, 16 is already part of the test suite information, or a leader for the combined test suites is elected among the involved side cars. For distributed test case execution, the test suites portions are executed by the respective test side car. Whenever the combined test cases require loading of probe data, running tests, or getting results from remote services, for example, those services that are not directly attached to the test coordinator module 12 executing test suites, the test system side car that is directly attached to the respective software component 14, 16 acts as a proxy for its service.

A variant of the invention is to have a coordinating external test system in addition to the test system side cars. The major function of the external test system is to conduct test cases related to multiple services, in particular so-called integration tests. It uses the individual test system side cars as proxies to load the test data to/from the test probes in the software components 14, 16, and a trigger test runs in the test probes. In this variant, the coordinating among the side cars is no longer required.

## Claims

1. A method for testing at least one software component (14, 16) of a system (18) by an electronic computing device (10), comprising the steps of:
- providing a test coordinator module (12) of the electronic computing device (10) for the system (18), wherein the test coordinator module (12) provides a test protocol for testing the software component (14, 16), and wherein the test coordinator module (12) is provided separately to the software component (14, 16); and
- testing the software component (14, 16) by coordinating the testing of the software component (14, 16) depending on the test protocol by the test coordinator module (12).

2. A method according to claim 1, **characterized in that**
the test coordinator module (12) is provided as a centralized module for the software component (14, 16).

3. A method according to claim 1 or 2, **characterized in that**
the test coordinator module (12) is provided for at least two different software components (14, 16) of the system (18).

4. A method according to claim 3, **characterized in that**
the test coordinator module (12) comprises a first coordinator element (34), which is provided as a first sidecar of a first software component (14), and a second coordinator element (36), which is provided as a second sidecar of a second software component (16).

5. A method according claim 4, **characterized in that**
the first coordinator element (34) and the second coordinator element (36) are connected to each other for coordinating the test protocol.

6. A method according to any one of claims 1 to 5, **characterized in that**
a service meta model module (28) is provided, which is connected to the test coordinator module (12), and wherein a test logic for testing the system (18) is provided by the service meta model module (28).

7. A method according claim 6, **characterized in that**
a point in time for testing the software component (14, 16) and/or a test probe for testing the software component (14, 16) and/or a trigger signal to test the software component (14, 16) and/or an expected result of the test and/or test suites are provided by the service meta model module (28).

8. A method according to claim 4 or 5 and 6 or 7, **characterized in that**
each coordinator element (3, 364) is communicating with the service meta model module (28).

9. A method according to claim 8, **characterized in that**
a test suite is coordinated by one of the test coordinator elements (34, 36), wherein a leader of the test suite is determined by the service meta model module (28).

10. A method according to any one of claims 1 to 9, **characterized in that**
an integration test of the software component (14, 16) in the system (18) is performed by the test coordinator module (12).

11. A method according to any one of claims 6 to 10, **characterized in that**
the service meta model module (28) is connected to a service meta model repository (26).

12. A method according to any one of claims 1 to 11, **characterized in that**
the software component (14, 16) is provided just as a business logic code.

13. A computer program product comprising program code means for performing a method according to any one of claims 1 to 12.

14. A computer-readable storage medium comprising at least the computer program product according to claim 13.

15. An electronic computing device (10) for testing a software component (14, 16) of a system (18), comprising at least one test coordinator module (12), wherein the electronic computing device (10) is configured for performing a method according to any one of clams 1 to 12.
